# EUROPEAN PATENT SPECIFICATION

(11) **EP 4 137 681 B1**
(45) Date of publication and mention of the grant of the patent: **02.10.2024**
(21) Application number: 22190497.2
(22) Date of filing: 16.08.2022
(51) Int. Cl.: F01L 1/344, F01L 1/053, F01M 9/10, F01M 11/02, F01M 5/00

(54) **OIL PASSAGE STRUCTURE OF INTERNAL COMBUSTION ENGINE**
ÖLDURCHFLUSSSTRUKTUR EINES VERBRENNUNGSMOTORS
STRUCTURE DE PASSAGE D'HUILE D'UN MOTEUR À COMBUSTION INTERNE

(30) Priority: 19.08.2021 JP 2021134060
(43) Date of publication of application: 22.02.2023
(73) Proprietor: Suzuki Motor Corporation, Hamamatsu-shi, Shizuoka 432-8611 (JP)
(72) Inventor: KANAI, Takuya, Hamamatsu-shi, 432-8611 (JP); OKAMURA, Sho, Hamamatsu-shi, 432-8611 (JP)
(74) Representative: Haseltine Lake Kempner LLP

(56) References cited:
- JP-A- 2016 128 682
- JP-A- 2018 003 694
- US-A1- 2016 208 663
- US-A1- 2019 284 969

## Description

### [Technical Field]

The present invention relates to an oil passage structure of an internal combustion engine.

### [Background Art]

Conventionally, a variable valve timing device to be controlled by a hydraulic pressure to be supplied from a hydraulic control valve has been known (see JP2016-128682A, JP2018-3694A, or US 2019/284969 A1). The variable valve timing device adjusts a rotational phase of a cam shaft relative to a crankshaft based on the hydraulic pressure to be supplied from the hydraulic control valve, and adjusts an opening/closing timing (valve timing) of a valve.

The variable valve timing device described in JP2016-128682A is provided in an end portion of an intake cam shaft and an end portion of an exhaust cam shaft, and the hydraulic control valve is attached to a cam chain cover, and is composed of an electromagnetic hydraulic control valve that supplies a hydraulic pressure to an intake-side variable valve timing device and an exhaust-side variable valve timing device.

A right side wall of a cylinder head is provided with an oil passage that supplies oil to each of an intake-side hydraulic control valve and an exhaust-side hydraulic control valve.

The oil passage includes a main oil passage extending diagonally upward from a bottom surface of the right side wall of the cylinder head and an intake VVT supply passage and an exhaust VVT supply passage that respectively supply oil from the main oil passage to the intake-side hydraulic control valve and the exhaust-side hydraulic control valve.

The oil passage is provided on the right side wall of the cylinder head, and includes an intake-side advanced angle passage that changes a phase of the intake cam shaft relative to the crankshaft in an advanced angle direction and an intake-side retarded angle passage that changes the phase of the intake cam shaft relative to the crankshaft in a retarded angle direction by a hydraulic pressure to be controlled by the intake-side hydraulic control valve.

The oil passage is provided on the right side wall of the cylinder head, and includes an exhaust-side advanced angle passage that changes a phase of the exhaust cam shaft relative to the crankshaft in the advanced angle direction and an exhaust-side retarded angle passage that changes the phase of the exhaust cam shaft relative to the crankshaft in the retarded angle direction by a hydraulic pressure to be controlled by the exhaust-side hydraulic control valve.

In the variable valve timing device described in JP2018-3694A, the hydraulic control valve is provided in an end portion of the cam shaft, and an actuator part is installed in an outer peripheral portion of the hydraulic control valve. The actuator part includes a housing constituting an advanced angle chamber and a retarded angle chamber to which oil is to be supplied from the hydraulic control valve and a vane member.

In the variable valve timing device described in JP2018-3694A, the actuator part can be installed in the vicinity of the hydraulic control valve, thereby making it possible to improve responsiveness at the time of change of the valve timing.

### [Citation List]

### [Patent Literature]

[Patent Literature 1] JP2016-128682A
[Patent Literature 2] JP2018-3694A

### [Summary of Invention]

### [Technical Problem]

In an engine including a variable valve timing device, when an intake-side variable valve timing device is operated as soon as possible after the engine is started, this is advantageous in reducing exhaust gas and improving fuel consumption.

To operate the intake-side variable valve timing device soon after starting the engine, oil needs to be quickly supplied to an intake-side hydraulic control valve, and a hydraulic pressure to be supplied to the intake-side hydraulic control valve needs to be accurately detected.

In the variable valve timing device described in each of JP2016-128682A and JP2018-3694A, there is no description about quickly supplying oil to the intake-side hydraulic control valve and accurately grasping a hydraulic pressure to be supplied to the intake-side hydraulic control valve, still leaving room for improvement.

The present invention has been made in view of the above-described problems, and is directed to providing an oil passage structure of an internal combustion engine that can quickly operate an intake-side valve timing adjustment device after starting an internal combustion engine, making it possible to reduce exhaust gas and reduce fuel consumption.

### [Solution to Problem]

The present invention provides an oil passage structure of an internal combustion engine including a cylinder head having an end wall provided in an end portion in an axial direction of a crankshaft and an intake-side wall that is provided on a side surface in a width direction perpendicular to the axial direction of the crankshaft and to which an intake manifold is connected, a cam cap provided on an upper surface of the end wall, an intake cam shaft to be rotatably supported on an intake-side bearing portion formed on the upper surface of the end wall and the cam cap, an exhaust cam shaft to be rotatably supported on an exhaust-side bearing portion formed on the upper surface of the end wall and the cam cap, an intake-side valve timing adjustment device including an intake-side hydraulic control valve provided in an end portion of the intake cam shaft and an intake-side actuator that is installed in an outer peripheral portion of the intake-side hydraulic control valve and adjusts a rotational phase of the intake cam shaft relative to the crankshaft using oil to be supplied from the intake-side hydraulic control valve, an exhaust-side valve timing adjustment device including an exhaust-side hydraulic control valve provided in an end portion of the exhaust cam shaft and an exhaust-side actuator that is installed in an outer peripheral portion of the exhaust-side hydraulic control valve and adjusts a rotational phase of the exhaust cam shaft relative to the crankshaft using oil to be supplied from the exhaust-side hydraulic control valve, and a hydraulic pressure sensor to be attached to the cylinder head, the oil passage structure being characterized by including a main oil passage provided on the end wall and to be supplied with oil from a hydraulic pressure source, an intake-side head oil passage and an exhaust-side head oil passage branching off from the main oil passage and leading to the upper surface of the end wall, an intake-side cam cap internal oil passage provided in the cam cap and allowing the intake-side head oil passage and the intake-side hydraulic control valve to communicate with each other, and an exhaust-side cam cap internal oil passage provided in the cam cap and allowing the exhaust-side head oil passage and the exhaust-side hydraulic control valve to communicate with each other, the intake-side cam cap internal oil passage is installed on an opposite side to the exhaust-side bearing portion with respect to the intake-side bearing portion, the exhaust-side cam cap internal oil passage is installed between the intake-side bearing portion and the exhaust-side bearing portion, the main oil passage and the exhaust-side head oil passage extend upward toward the exhaust-side cam cap internal oil passage from below the exhaust-side cam cap internal oil passage, the intake-side head oil passage includes a first intake-side head oil passage extending toward the intake-side wall from the main oil passage and a second intake-side head oil passage extending upward from an outer end portion in a direction in which the first intake-side head oil passage extends and leading to the intake-side cam cap internal oil passage, and the second intake-side head oil passage is provided with a sensor attachment boss that attaches the hydraulic pressure sensor.

### [Advantageous Effects of Invention]

Thus, according to the present invention, described above, the intake-side valve timing adjustment device can be quickly operated after the internal combustion engine is started, making it possible to reduce exhaust gas and reduce fuel consumption.

### [Brief Description of Drawings]

[Figure 1] Figure 1 is a front view of an internal combustion engine according to an embodiment of the present invention.
[Figure 2] Figure 2 is a top view of the internal combustion engine according to the embodiment of the present invention, illustrating a state where a cylinder head cover has been removed.
[Figure 3] Figure 3 is a right side view of an upper portion of the internal combustion engine according to the embodiment of the present invention.
[Figure 4] Figure 4 is a cross-sectional view taken along a line IV-IV illustrated in Figure 3.
[Figure 5] Figure 5 is a top view of the internal combustion engine according to the embodiment of the present invention, illustrating a state where the cylinder head cover and a cam cap on a front wall side of a cylinder head have been removed.
[Figure 6] Figure 6 is a front side view of an upper portion of the cylinder head in the internal combustion engine according to the embodiment of the present invention.
[Figure 7] Figure 7 is a cross-sectional view taken along a line VII-VII illustrated in Figure 5.
[Figure 8] Figure 8 is a cross-sectional view taken along a line VIII-VIII illustrated in Figure 5.
[Figure 9] Figure 9 is a cross-sectional view taken along a line IX-IX illustrated in Figure 7.

### [Description of Embodiment]

An oil passage structure of an internal combustion engine according to an embodiment of the present invention is an oil passage structure of an internal combustion engine including a cylinder head having an end wall provided in an end portion in an axial direction of a crankshaft and an intake-side wall that is provided on a side surface in a width direction perpendicular to the axial direction of the crankshaft and to which an intake manifold is connected, a cam cap provided on an upper surface of the end wall, an intake cam shaft to be rotatably supported on an intake-side bearing portion formed on the upper surface of the end wall and the cam cap, an exhaust cam shaft to be rotatably supported on an exhaust-side bearing portion formed on the upper surface of the end wall and the cam cap, an intake-side valve timing adjustment device including an intake-side hydraulic control valve provided in an end portion of the intake cam shaft and an intake-side actuator that is installed in an outer peripheral portion of the intake-side hydraulic control valve and adjusts a rotational phase of the intake cam shaft relative to the crankshaft using oil to be supplied from the intake-side hydraulic control valve, an exhaust-side valve timing adjustment device including an exhaust-side hydraulic control valve provided in an end portion of the exhaust cam shaft and an exhaust-side actuator that is installed in an outer peripheral portion of the exhaust-side hydraulic control valve and adjusts a rotational phase of the exhaust cam shaft relative to the crankshaft using oil to be supplied from the exhaust-side hydraulic control valve, and a hydraulic pressure sensor to be attached to the cylinder head, the oil passage structure including a main oil passage provided on the end wall and to be supplied with oil from a hydraulic pressure source, an intake-side head oil passage and an exhaust-side head oil passage branching off from the main oil passage and leading to the upper surface of the end wall, an intake-side cam cap internal oil passage provided in the cam cap and allowing the intake-side head oil passage and the intake-side hydraulic control valve to communicate with each other, and an exhaust-side cam cap internal oil passage provided in the cam cap and allowing the exhaust-side head oil passage and the exhaust-side hydraulic control valve to communicate with each other, in which the intake-side cam cap internal oil passage is installed on an opposite side to the exhaust-side bearing portion with respect to the intake-side bearing portion, the exhaust-side cam cap internal oil passage is installed between the intake-side bearing portion and the exhaust-side bearing portion, the main oil passage and the exhaust-side head oil passage extend upward toward the exhaust-side cam cap internal oil passage from below the exhaust-side cam cap internal oil passage, the intake-side head oil passage includes a first intake-side head oil passage extending toward the intake-side wall from the main oil passage and a second intake-side head oil passage extending upward from an outer end portion in a direction in which the first intake-side head oil passage extends and leading to the intake-side cam cap internal oil passage, and the second intake-side head oil passage is provided with a sensor attachment boss that attaches the hydraulic pressure sensor.

As a result, the oil passage structure of the internal combustion engine according to the embodiment of the present invention can quickly operate the intake-side valve timing adjustment device after starting the internal combustion engine, making it possible to reduce exhaust gas and reduce fuel consumption.

### [Embodiment 1]

An embodiment of an oil passage structure of an internal combustion engine according to the present invention will be described below with reference to the drawings.

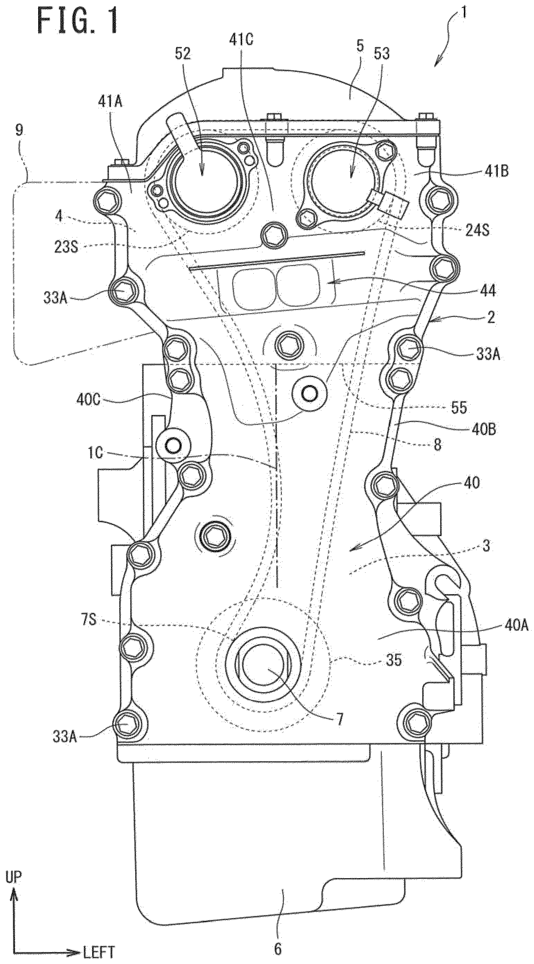

Figure 1 to Figure 9 are diagrams each illustrating an oil passage structure of an internal combustion engine according to the embodiment of the present invention. In Figure 1 to Figure 9, up-down, front-rear, and left-right directions are defined as follows.

A direction along a crankshaft is set as a front-rear direction of an engine, and the side on which a timing chain is arranged is set as the front side and the opposite side thereof is set as the rear side. A direction along a center axis of a cylinder is set as an up-down direction of the engine, and the side of a cylinder head is set as the upper side and the opposite side thereof is set as the lower side. A direction intersecting the crankshaft and the center axis of the cylinder is set as a left-right direction of the engine, and the left side of the center axis of the cylinder and the right side of the center axis of the cylinder with the crankshaft viewed from the rear side are respectively set as the left side and the right side.

First, a configuration will be described.

In Figure 1, an engine 1 includes an engine main body 2 and a chain cover 40. The engine main body 2 includes a cylinder block 3, a cylinder head 4, a cylinder head cover 5, and an oil pan 6. The engine 1 in the present embodiment constitutes an internal combustion engine. A virtual line 55 illustrated in Figure 1 is a boundary between the cylinder block 3 and the cylinder head 4.

The cylinder block 3 is provided with a plurality of cylinders not illustrated, and the cylinders are installed side by side in a front-rear direction of the engine 1. The engine 1 is installed such that a center axis 1C of the cylinders extends in its up-down direction.

A piston not illustrated is accommodated in each of the cylinders. The piston is connected to a crankshaft 7 with a connecting rod not illustrated interposed therebetween. The crankshaft 7 has a rotational center axis extending in its front-rear direction, and rotates around the rotational center axis.

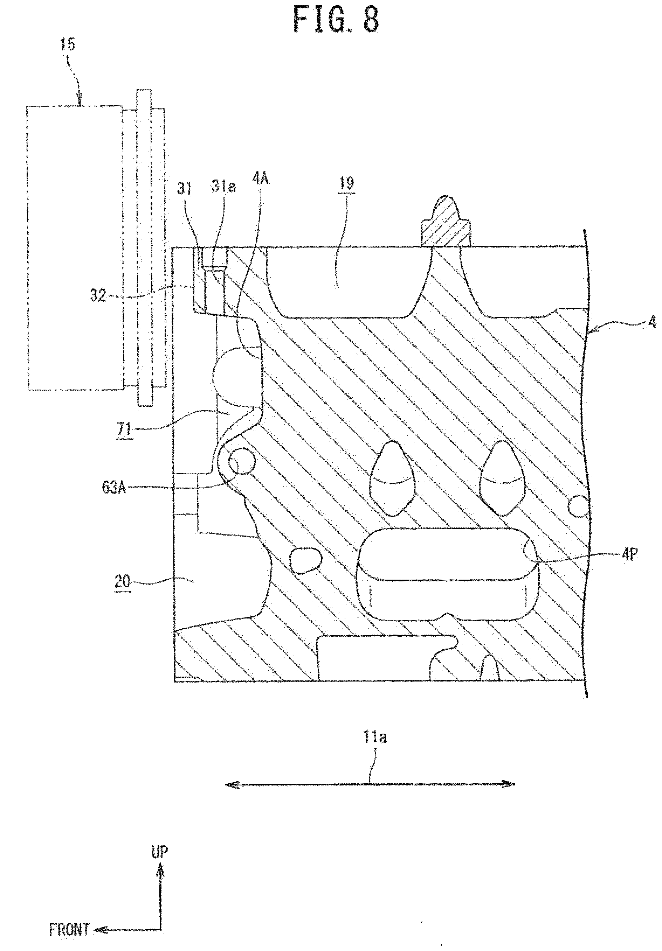

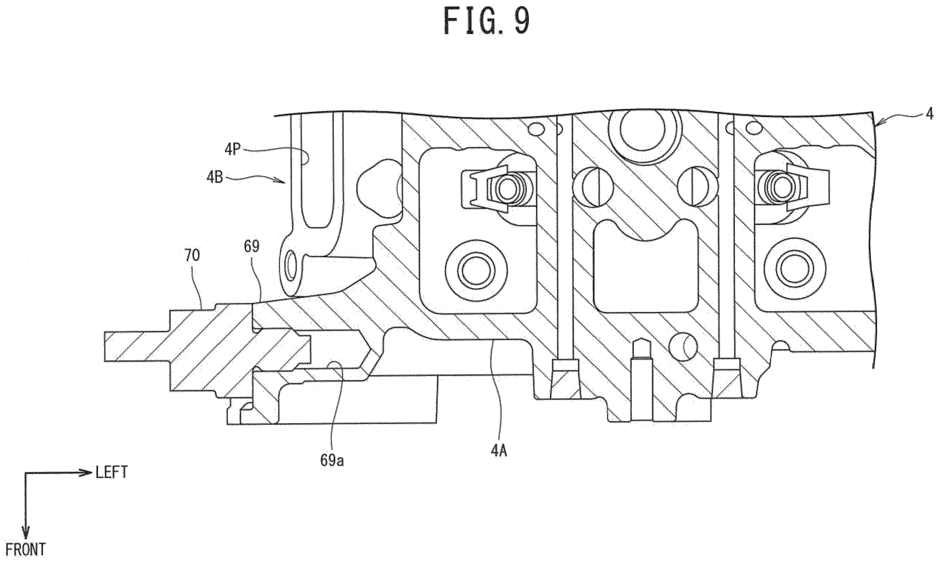

A piston reciprocates in the cylinder, to rotate the crankshaft 7 via a connecting rod. A plurality of intake ports 4P (one intake port is illustrated in Figure 8 and Figure 9) and a plurality of exhaust ports not illustrated are formed in the cylinder head 4.

The intake ports 4P respectively communicate with the cylinders, to introduce incoming air into the cylinders. An exhaust manifold communicates with the plurality of cylinders, respectively, through the exhaust ports, and collects respective exhaust gases released from the plurality of cylinders and releases the exhaust gases to a catalyst converter not illustrated from an exhaust port.

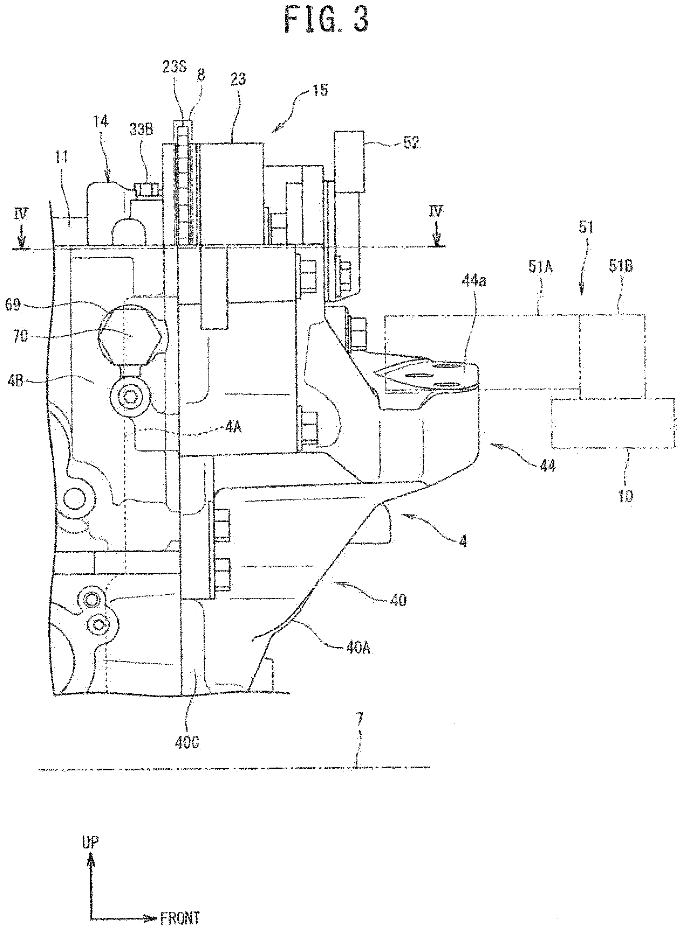

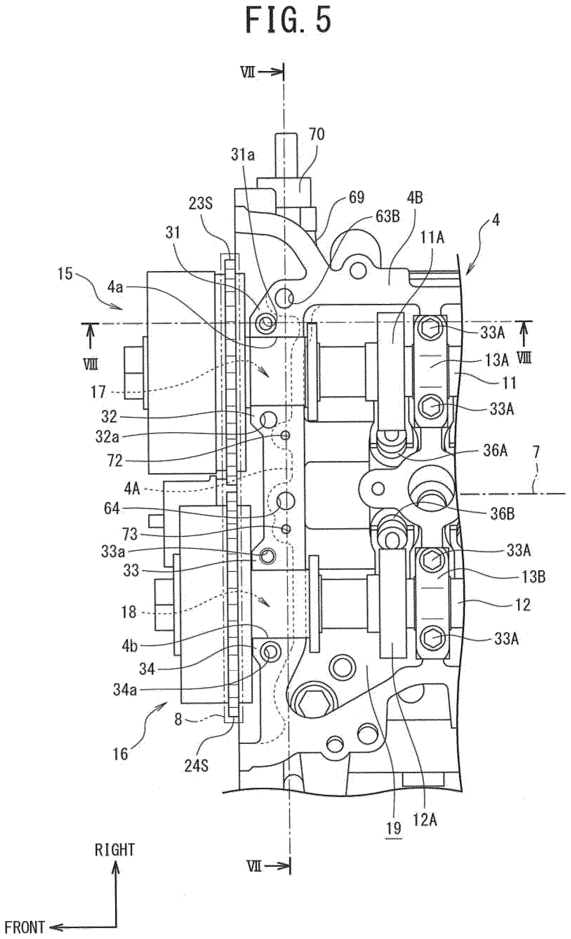

As illustrated in Figure 3 and Figure 5, the cylinder head 4 has a front wall 4A and an intake-side wall 4B. The front wall 4A is provided in a front end portion (end portion) in an axial direction of the crankshaft 7, and the intake-side wall 4B is provided on a right side surface (side surface) of the cylinder head 4 in a width direction perpendicular to the axial direction of the crankshaft 7. The front wall 4A in the present embodiment constitutes an end wall.

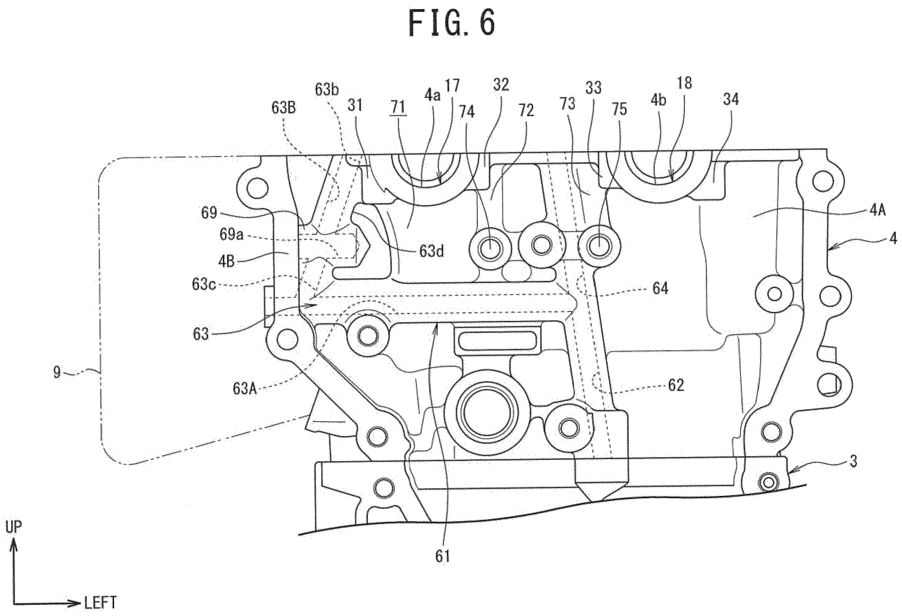

An intake manifold 9 (indicated by a virtual line in Figure 1 and Figure 6) is attached to the intake-side wall 4B of the cylinder head 4. The intake manifold 9 is cleaned by an air cleaner not illustrated, and then distributes air sucked into an intake pipe not illustrated among the intake ports 4P in the cylinder head 4.

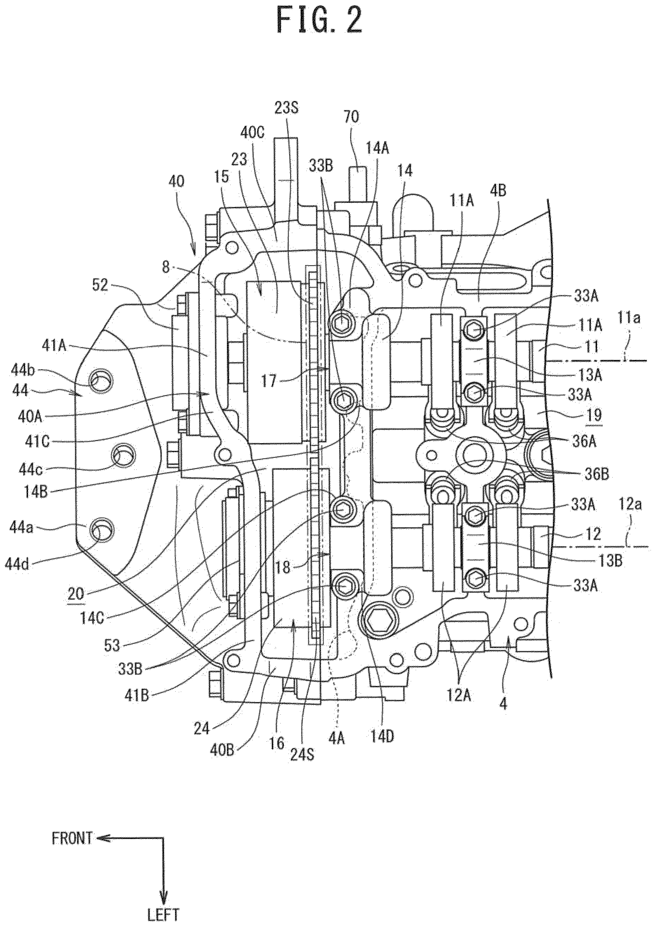

A valve chamber 19 is formed in the cylinder head 4 and the cylinder head cover 5, and an intake cam shaft 11 and an exhaust cam shaft 12 are rotatably supported on the cylinder head 4 (see Figure 2). That is, the intake cam shaft 11 and the exhaust cam shaft 12 are installed in the valve chamber 19.

As illustrated in Figure 2, the intake cam shaft 11 and the exhaust cam shaft 12 are installed side by side in the left-right direction of the engine 1 such that their respective rotational center axes 11a and 12a extend parallel to the front-rear direction of the engine 1.

The intake cam shaft 11 includes a plurality of intake cams 11A (two intake cams are illustrated), and the intake cams 11A are installed side by side in a direction of the rotational center axis 11a of the intake cam shaft 11.

The plurality of (e.g., two) intake cams 11A are provided for each of the cylinders. Each of the intake ports 4P is provided with an intake valve not illustrated, and each of the intake cams 11A operates the intake valve and opens and closes the intake port 4P, to allow the cylinder and the intake port 4P to communicate with or discommunicate with each other.

The exhaust cam shaft 12 includes a plurality of exhaust cams 12A (two exhaust cams are illustrated), and the exhaust cams 12A are installed side by side in a direction of the rotational center axis 12a of the exhaust cam shaft 12. The direction of the rotational center axes 11a and 12a is hereinafter referred to as an axial direction.

The plurality of (e.g., two) exhaust cams 12A are provided for each of the cylinders. Each of the exhaust ports is provided with an exhaust valve not illustrated, and each of the exhaust cams 12A operates the exhaust valve and opens and closes the exhaust port, to allow the cylinder and the exhaust port to communicate with or discommunicate with each other.

As illustrated in Figure 2, an intake cam cap 13A, an exhaust cam cap 13B, and a cam cap 14 are attached to an upper surface of the cylinder head 4. The intake cam cap 13A and the exhaust cam cap 13B are respectively installed between the intake cams 11A and between the exhaust cams 12A provided for each of the cylinders in the axial direction of the intake cam shaft 11 and the exhaust cam shaft 12.

Respective inner peripheral surfaces of the intake cam cap 13A and the exhaust cam cap 13B are respectively provided with an intake cam bearing surface and an exhaust cam bearing surface not illustrated. The upper surface of the cylinder head 4 opposing the intake cam bearing surface and the exhaust cam bearing surface is provided with an intake cam bearing surface and an exhaust cam bearing surface not illustrated.

Each of the intake cam cap 13A and the exhaust cam cap 13B is fixed to the upper surface of the cylinder head 4 with bolts 33A. The intake cam shaft 11 is rotatably supported on the intake cam bearing surface of the intake cam cap 13A and the intake cam bearing surface of the cylinder head 4.

The exhaust cam shaft 12 is rotatably supported on the exhaust cam bearing surface of the exhaust cam cap 13B and the exhaust cam bearing surface of the cylinder head 4.

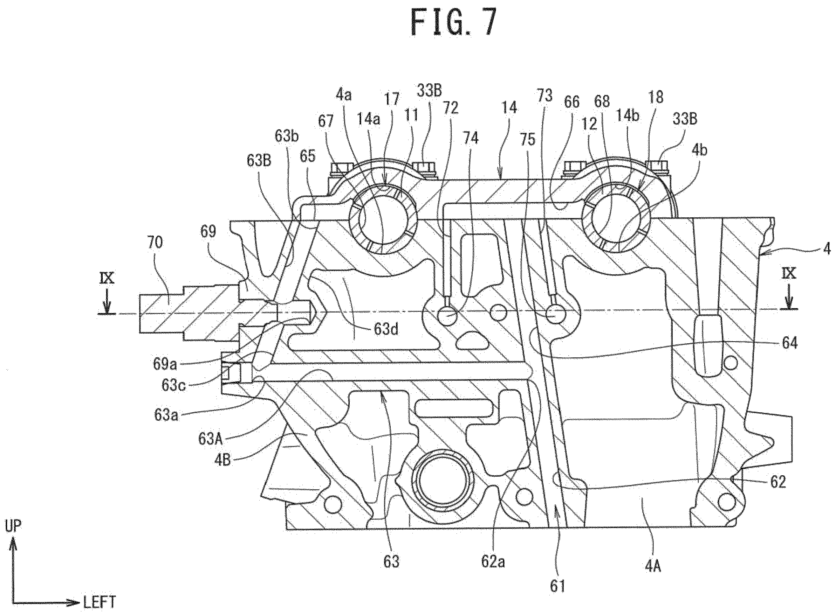

As illustrated in Figure 5 and Figure 6, an intake-side bearing surface 4a and an exhaust-side bearing surface 4b are provided on an upper surface of the front wall 4A. As illustrated in Figure 7, an intake-side bearing surface 14a and an exhaust-side bearing surface 14b are provided on an inner peripheral surface of the cam cap 14.

The intake cam shaft 11 is rotatably supported on the intake-side bearing surface 4a of the front wall 4A and the intake-side bearing surface 14a of the cam cap 14, and the exhaust cam shaft 12 is rotatably supported on the exhaust-side bearing surface 4b of the front wall 4A and the exhaust-side bearing surface 14b of the cam cap 14.

In the present embodiment, the intake-side bearing surface 4a and the intake-side bearing surface 14a constitute an intake-side bearing portion 17, and the exhaust-side bearing surface 4b and the exhaust-side bearing surface 14b constitute an exhaust-side bearing portion 18.

As illustrated in Figure 2 and Figure 7, the cam cap 14 is fixed to the upper surface of the front wall 4A of the cylinder head 4 with bolts 33B.

As illustrated in Figure 5 and Figure 6, an upper end portion of the front wall 4A of the cylinder head 4 is provided with bolt attachment bosses 31 and 32. The bolt attachment bosses 31 and 32 are respectively installed in both side portions of the intake-side bearing portion 17 (both side portions in the left-right direction of the engine 1), and the intake-side bearing portion 17 is formed between the bolt attachment bosses 31 and 32 in the left-right direction of the engine 1.

Screw grooves 31a and 32a into which the bolts 33B are to be screwed are respectively formed on inner peripheral surfaces of the bolt attachment bosses 31 and 32.

The upper end portion of the front wall 4A of the cylinder head 4 is provided with bolt attachment bosses 33 and 34. The bolt attachment bosses 33 and 34 are respectively installed in both side portions of the exhaust-side bearing portion 18 (both side portions in the left-right direction of the engine 1), and the exhaust-side bearing portion 18 is formed between the bolt attachment bosses 33 and 34 in the left-right direction of the engine 1.

Screw grooves 33a and 34a into which the bolts 33B are to be screwed are respectively formed on inner peripheral surfaces of the bolt attachment bosses 33 and 34.

As illustrated in Figure 2, the cam cap 14 is provided with bosses 14A, 14B, 14C, and 14D into which the bolts 33B are to be respectively inserted. The cam cap 14 is attached to the upper surface of the front wall 4A when the bolts 33B are respectively screwed into the screw grooves 31a, 32a, 33a, and 34a through the bosses 14A, 14B, 14C, and 14D.

As illustrated in Figure 2 and Figure 3, an intake-side valve timing adjustment device 15 is attached to a front end portion (end portion) in the axial direction of the intake cam shaft 11. The intake-side valve timing adjustment device 15 includes an intake-side housing member 23, and an outer peripheral portion of the intake-side housing member 23 is provided with an intake sprocket 23S.

As illustrated in Figure 2, an exhaust-side valve timing adjustment device 16 is attached to a front end portion (end portion) in the axial direction of the exhaust cam shaft 12. The exhaust-side valve timing adjustment device 16 includes an exhaust-side housing member 24, and an outer peripheral portion of the exhaust-side housing member 24 is provided with an exhaust sprocket 24S.

In the axial direction of the intake cam shaft 11 and the exhaust cam shaft 12, the length of the intake-side housing member 23 is made larger than the length of the exhaust-side housing member 24.

As illustrated in Figure 1, the front end portion of the crankshaft 7 is provided with a crank sprocket 7S. A timing chain 8 is wound around the crank sprocket 7S, the intake sprocket 23S, and the exhaust sprocket 24S.

Power of the crankshaft 7 is transmitted to the intake cam shaft 11 and the exhaust cam shaft 12 via the timing chain 8. As a result, the intake cam shaft 11 rotates so that the intake valve is opened or closed by the intake cam 11A, and the exhaust cam shaft 12 rotates so that the exhaust valve is opened or closed by the exhaust cam 12A.

The intake-side valve timing adjustment device 15 adjusts a rotational phase of the intake cam shaft 11 relative to the crankshaft 7, and adjusts an opening/closing timing (valve timing) of the intake valve.

The exhaust-side valve timing adjustment device 16 adjusts a rotational phase of the exhaust cam shaft 12 relative to the crankshaft 7, and adjusts an opening/closing timing (valve timing) of the exhaust valve.

As illustrated in Figure 1, the cylinder block 3 is provided with an oil pump 35. The oil pump 35 supplies oil to be stored in the oil pan 6 to each of portions of the engine 1 upon being driven by the crankshaft 7. The oil pump 35 in the present embodiment constitutes a hydraulic pressure source.

The chain cover 40 is attached to a front end portion (end portion) of the cylinder block 3 and a front end portion (end portion) of the cylinder head 4.

A length in an up-down direction of the chain cover 40 is made larger than a length in a left-right direction of the chain cover 40 such that a direction of the chain cover 40 along the up-down direction of the engine 1 is a longitudinal direction and a direction along the left-right direction of the engine 1 is a direction perpendicular to the longitudinal direction. As illustrated in Figure 1 to Figure 3, the chain cover 40 has a vertical wall 40A, a left side wall 40B, and a right side wall 40C.

The vertical wall 40A opposes the front end portion of each of the cylinder block 3 and the cylinder head 4 in the axial direction of the intake cam shaft 11 and the exhaust cam shaft 12.

The left side wall 40B and the right side wall 40C respectively protrude toward the engine main body 2 from a left end portion and a right end portion in the direction perpendicular to the longitudinal direction of the chain cover 40 (the left-right direction of the chain cover 40), and their distal end portions in a protrusion direction are respectively fastened to the front end portion of the cylinder block 3 and the front end portion of the cylinder head 4 with the plurality of bolts 33A (see Figure 1). As a result, the chain cover 40 is fixed to the engine main body 2.

As illustrated in Figure 2, a chain chamber 20 is formed between the cylinder block 3 and the cylinder head 4, and the chain cover 40, and the timing chain 8, the intake-side valve timing adjustment device 15, and the exhaust-side valve timing adjustment device 16 are accommodated in the chain chamber 20 (see Figure 2).

In Figure 1, Figure 2, Figure 3, and Figure 5, the timing chain 8 is indicated by a virtual line. The chain cover 40 in the present embodiment constitutes a cover member.

As illustrated in Figure 1 and Figure 2, an intake-side vertical wall portion 41A and an exhaust-side vertical wall portion 41B are provided in an upper portion of the vertical wall 40A of the chain cover 40, and the intake-side vertical wall portion 41A and the exhaust-side vertical wall portion 41B are installed in parallel in a width direction (the direction perpendicular to the longitudinal direction) of the chain cover 40.

The intake-side vertical wall portion 41A opposes the intake-side valve timing adjustment device 15 in the axial direction of the intake cam shaft 11, and covers the intake-side valve timing adjustment device 15.

The exhaust-side vertical wall portion 41B opposes the exhaust-side valve timing adjustment device 16 in the axial direction of the exhaust cam shaft 12, and covers the exhaust-side valve timing adjustment device 16.

The exhaust-side vertical wall portion 41B is recessed toward the engine main body 2 side with respect to the intake-side vertical wall portion 41A.

That is, the exhaust-side vertical wall portion 41B is recessed to come closer to the engine main body 2 side with respect to the intake-side vertical wall portion 41A, and the intake-side vertical wall portion 41A protrudes to separate from the engine main body 2 with respect to the exhaust-side vertical wall portion 41B.

The intake-side vertical wall portion 41A and the exhaust-side vertical wall portion 41B are connected to each other by a stepped portion 41C having steps in the axial direction of the intake cam shaft 11. That is, the intake-side vertical wall portion 41A and the exhaust-side vertical wall portion 41B are spaced apart from each other in the axial direction of the intake cam shaft 11 and the exhaust cam shaft 12 by the stepped portion 41C.

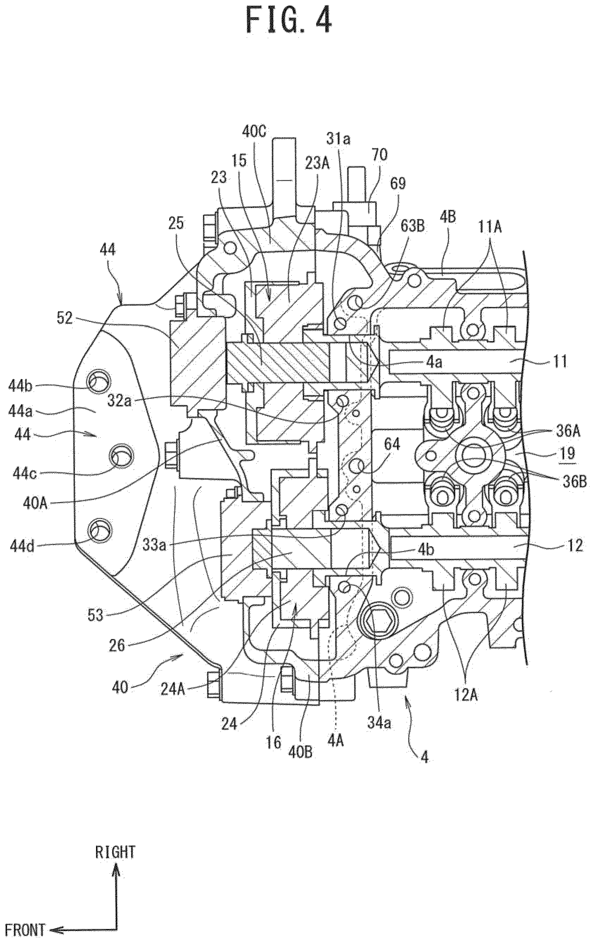

As illustrated in Figure 4, an intake-side vane rotor 23A is accommodated in the intake-side housing member 23, and the intake-side vane rotor 23A rotates integrally with the intake cam shaft 11. The intake-side vane rotor 23A partitions the inside of the intake-side housing member 23 into a plurality of advanced angle chambers and a plurality of retarded angle chambers not illustrated.

The intake-side valve timing adjustment device 15 is provided with an intake-side spool valve 25.

The intake-side spool valve 25 has a valve member that is installed on the axial direction of the intake cam shaft 11, rotates integrally with the intake cam shaft 11, and is movable in the axial direction of the intake cam shaft 11.

As illustrated in Figure 1, the intake-side vertical wall portion 41A in the chain cover 40 is provided with an intake-side solenoid 52. As illustrated in Figure 4, the intake-side solenoid 52 is attached to the intake-side vertical wall portion 41A to oppose the intake-side spool valve 25 in the axial direction of the intake cam shaft 11.

The intake-side solenoid 52 operates the intake-side spool valve 25 such that the valve member of the intake-side spool valve 25 moves in the axial direction of the intake cam shaft 11.

When the intake-side solenoid 52 moves the valve member of the intake-side spool valve 25 to a position on the advanced angle chamber side in the axial direction of the intake cam shaft 11, oil to be supplied from the oil pump 35 is supplied to the advanced angle chambers. An oil passage from the oil pump 35 to the intake-side valve timing adjustment device 15 will be described below.

When oil is supplied to the advanced angle chambers, the intake-side vane rotor 23A rotates relative to the intake-side housing member 23. As a result, a rotational phase of the intake cam shaft 11 relative to the crankshaft 7 is adjusted to the advanced angle side, and an opening/closing timing of the intake valve is adjusted to the advanced angle side.

When the intake-side solenoid 52 moves the valve member of the intake-side spool valve 25 to a position on the retarded angle chamber side in the axial direction of the intake cam shaft 11, oil to be supplied from the oil pump 35 is supplied to the retarded angle chambers.

When oil is supplied to the retarded angle chambers, the intake-side vane rotor 23A rotates relative to the intake-side housing member 23. As a result, a rotational phase of the intake cam shaft 11 relative to the crankshaft 7 is adjusted to the retarded angle side, and an opening/closing timing of the intake valve is adjusted to the retarded angle side.

Thus, the intake-side spool valve 25 and the intake-side solenoid 52 in the present embodiment operate the intake-side valve timing adjustment device 15 using oil, and adjusts a rotational phase of the intake cam shaft 11 relative to the crankshaft 7.

The intake-side spool valve 25 in the present embodiment constitutes an intake-side hydraulic control valve. The intake-side housing member 23 and the intake-side vane rotor 23A are installed in an outer peripheral portion of the intake-side spool valve 25, and constitute an intake-side actuator that adjusts a rotational phase of the intake cam shaft 11 relative to the crankshaft 7 using oil to be supplied from the intake-side spool valve 25.

An exhaust-side vane rotor 24A is accommodated in the exhaust-side housing member 24, and the exhaust-side vane rotor 24A rotates integrally with the exhaust cam shaft 12. The exhaust-side vane rotor 24A partitions the inside of the exhaust-side housing member 24 into a plurality of advanced angle chambers and a plurality of retarded angle chambers not illustrated.

As illustrated in Figure 4, the exhaust-side valve timing adjustment device 16 is provided with an exhaust-side spool valve 26. The exhaust-side spool valve 26 has a valve member that is installed on the axial direction of the exhaust cam shaft 12, rotates integrally with the exhaust cam shaft 12, and is movable in the axial direction of the exhaust cam shaft 12.

As illustrated in Figure 1, the exhaust-side vertical wall portion 41B in the chain cover 40 is provided with an exhaust-side solenoid 53. As illustrated in Figure 4, the exhaust-side solenoid 53 is attached to the exhaust-side vertical wall portion 41B to oppose the exhaust-side spool valve 26 in the axial direction of the exhaust cam shaft 12.

The exhaust-side spool valve 26 is operated by the exhaust-side solenoid 53, to supply oil to either the advanced angle chambers or the retarded angle chambers, like in the intake-side valve timing adjustment device 15. As a result, a rotational phase of the exhaust cam shaft 12 relative to the crankshaft 7 is adjusted to the advanced angle side or the retarded angle side, and an opening/closing timing of the exhaust valve is adjusted to the advanced angle side or the retarded angle side.

The exhaust-side spool valve 26 in the present embodiment constitutes an exhaust-side hydraulic control valve. The exhaust-side housing member 24 and the exhaust-side vane rotor 24A are installed in an outer peripheral portion of the exhaust-side spool valve 26, and constitute an exhaust-side actuator that adjusts a rotational phase of the exhaust cam shaft 12 relative to the crankshaft 7 using oil to be supplied from the exhaust-side spool valve 26.

As illustrated in Figure 1 and Figure 3, an upper portion of the vertical wall 40A of the chain cover 40 is provided with a mount attachment part 44.

The mount attachment part 44 is positioned below the intake-side vertical wall portion 41A and the exhaust-side vertical wall portion 41B, and protrudes in a direction away from the engine main body 2 (forward) with respect to the chain cover 40.

As illustrated in Figure 3, a side member 10 is provided in front of the engine 1, and the side member 10 extends in its front-rear direction.

A distal end portion of the mount attachment part 44 is provided with an attachment seat 44a (see Figure 2 and Figure 4), bolt holes 44b, 44c, and 44d to which bolts as fasteners not illustrated are to be respectively fastened are formed in the attachment seat 44a.

As illustrated in Figure 3, a mount member 51 is attached to the attachment seat 44a. The mount member 51 includes a mount bracket 51A, and a bolt is inserted into a rear end portion of the mount bracket 51A.

The bolt inserted into the rear end portion of the mount bracket 51A is fastened to the bolt holes 44b, 44c, and 44d. As a result, the rear end portion of the mount bracket 51A is fixed to the attachment seat 44a.

The mount member 51 includes a vibration absorbing member 51B, and the vibration absorbing member 51B is attached to the side member 10. A front end portion of the mount bracket 51A is attached to the vibration absorbing member 51B, and the engine main body 2 is elastically supported on the side member 10 with the mount member 51 interposed therebetween.

As a result, the vibration of the engine 1 can be absorbed by the mount member 51, and vibration to be transmitted to the side member 10 from the engine 1 can be suppressed. As illustrated in Figure 6 and Figure 7, the front wall 4A of the cylinder head 4 is provided with an oil passage 61.

The oil passage 61 includes a main oil passage 62, an intake-side head oil passage 63, an exhaust-side head oil passage 64, an intake-side cam cap internal oil passage 65, an exhaust-side cam cap internal oil passage 66, an intake cam shaft internal oil passage 67, and an exhaust cam shaft internal oil passage 68.

The oil passage 61 in the present embodiment is configured to include a cylindrical portion protruding from the front wall 4A and an oil passage that is provided in the cylindrical portion and through which oil flows.

The main oil passage 62 linearly extends in its up-down direction toward the upper surface from a lower surface of the cylinder head 4, and oil is supplied to the main oil passage 62 from the oil pump 35. The upstream side of the main oil passage 62 communicates with a block-side oil passage not illustrated provided in the cylinder block 3, and the block-side oil passage introduces oil to be discharged from the oil pump 35 into the main oil passage 62. "Upstream" and "downstream" respectively means being "upstream of" and "downstream of" a direction in which oil flows.

The intake-side head oil passage 63 branches off from the main oil passage 62 and leads to the upper surface of the front wall 4A. Specifically, as illustrated in Figure 7, the intake-side head oil passage 63 includes a first intake-side head oil passage 63A linearly extending toward the intake-side wall 4B from a branch part 62a of the main oil passage 62 and a second intake-side head oil passage 63B linearly extending upward from an outer end portion 63a in a direction in which the first intake-side head oil passage 63A extends and leads to the intake-side cam cap internal oil passage 65.

The exhaust-side head oil passage 64 branches off from the branch part 62a of the main oil passage 62 and linearly extends upward from the branch part 62a, and leads to the upper surface of the front wall 4A.

The main oil passage 62 in the cylinder head 4 is composed of an oil passage from a lower end of the front wall 4A to the branch part 62a from which the intake-side head oil passage 63 and the exhaust-side head oil passage 64 branch off.

Thus, the main oil passage 62 and the exhaust-side head oil passage 64 in the present embodiment linearly extend upward toward the exhaust-side cam cap internal oil passage 66 from below the exhaust-side cam cap internal oil passage 66.

The intake-side cam cap internal oil passage 65 is provided in the cam cap 14, and allows the second intake-side head oil passage 63B and the intake cam shaft internal oil passage 67 to communicate with each other. The intake cam shaft internal oil passage 67 is provided in the end portion of the intake cam shaft 11, and allows the second intake-side head oil passage 63B and an oil passage of the intake-side spool valve 25 to communicate with each other.

The intake-side spool valve 25 is controlled by the intake-side solenoid 52, to supply oil to be supplied from the intake cam shaft internal oil passage 67 to the advanced angle chambers or the retarded angle chambers in the intake-side valve timing adjustment device 15.

The exhaust-side cam cap internal oil passage 66 is provided in the cam cap 14, and allows the exhaust-side head oil passage 64 and the exhaust cam shaft internal oil passage 68 to communicate with each other. The exhaust cam shaft internal oil passage 68 is provided in the end portion of the exhaust cam shaft 12, and allows the exhaust-side head oil passage 64 and an oil passage of the exhaust-side spool valve 26 to communicate with each other.

The exhaust-side spool valve 26 is controlled by the exhaust-side solenoid 53, to supply oil to be supplied from the exhaust cam shaft internal oil passage 68 to the advanced angle chambers or the retarded angle chambers in the exhaust-side valve timing adjustment device 16.

The exhaust-side cam cap internal oil passage 65 is installed side by side with the exhaust-side cam cap internal oil passage 66 in the left-right direction of the engine 1, and is installed on the opposite side to the exhaust-side bearing portion 18 with respect to the intake-side bearing portion 17.

In other words, the intake-side cam cap internal oil passage 65 is installed on the intake-side wall 4B side with respect to the intake-side bearing portion 17, and the exhaust-side cam cap internal oil passage 66 is installed between the intake-side bearing portion 17 and the exhaust-side bearing portion 18.

The intake-side cam cap internal oil passage 65 and the exhaust-side cam cap internal oil passage 66 are installed side by side in the left-right direction of the engine 1 at the same height position, and the length of the intake-side cam cap internal oil passage 65 along the left-right direction of the engine 1 is made smaller than the length of the exhaust-side cam cap internal oil passage 66 along the left-right direction of the engine 1.

As illustrated in Figure 7 and Figure 9, the second intake-side head oil passage 63B is provided with a sensor attachment boss 69, and a sensor hole portion 69a is provided in the sensor attachment boss 69. A hydraulic pressure sensor 70 is inserted into the sensor hole portion 69a, and the hydraulic pressure sensor 70 is attached to the sensor attachment boss 69.

The hydraulic pressure sensor 70 detects a pressure (hydraulic pressure) of oil flowing through the second intake-side head oil passage 63B, and transmits a signal to a controller not illustrated.

The controller controls the intake-side solenoid 52 and the exhaust-side solenoid 53 based on the hydraulic pressure sensor 70, and adjusts a rotational phase of the intake cam shaft 11 relative to the crankshaft 7 and a rotational phase of the exhaust cam shaft 12 relative to the crankshaft 7.

As illustrated in Figure 6, in the second intake-side head oil passage 63B, an upper end portion 63b is positioned on the intake-side wall 4B side with respect to the bolt attachment bosses 31 and 32.

As illustrated in Figure 5, the second intake-side head oil passage 63B is positioned on the opposite side to the intake-side valve timing adjustment device 15 with respect to the bolt attachment bosses 31 and 32 in the axial direction of the intake cam shaft 11, and is adjacent to the bolt attachment boss 31 in the left-right direction of the engine 1.

As illustrated in Figure 6 and Figure 7, the second intake-side head oil passage 63B is inclined to come closer to the intake-side wall 4B toward a lower end portion 63c from the upper end portion 63b, and extends diagonally upward left toward the intake-side bearing portion 17 from the outer end portion 63a of the first intake-side head oil passage 63A.

As illustrated in Figure 6 and Figure 8, the bolt attachment bosses 31 and 32 protrude toward the intake-side valve timing adjustment device 15 from the front wall 4A in the axial direction of the intake cam shaft 11, and a space 71 is formed below the bolt attachment bosses 31 and 32.

As illustrated in Figure 6, a sensor hole portion 69a protrudes to the side closer to the bolt attachment bosses 31 and 32 than an outer wall 63d of the second intake-side head oil passage 63B, and extends toward the side closer to the bolt attachment bosses 31 and 32 than the second intake-side head oil passage 63B.

The space 71 is formed between the sensor attachment boss 69 and the bolt attachment bosses 31 and 32, and the sensor attachment boss 69 protrudes toward the space 71 from the second intake-side head oil passage 63B.

As illustrated in Figure 6 and Figure 7, the front wall 4A is provided with a first communication oil passage 72, a second communication oil passage 73, an intake-side lash adjuster oil passage 74, and an exhaust-side lash adjuster oil passage 75.

The first communication oil passage 72 allows the exhaust-side cam cap internal oil passage 66 and the intake-side lash adjuster oil passage 74 to communicate with each other. The intake-side lash adjuster oil passage 74 extends in a front-rear direction of the cylinder head 4, and supplies operating oil to an intake-side lash adjuster 36A.

The second communication oil passage 73 allows the exhaust-side cam cap internal oil passage 66 and the exhaust-side lash adjuster oil passage 75 to communicate with each other. The exhaust-side lash adjuster oil passage 75 extends parallel to the intake-side lash adjuster oil passage 74 in the front-rear direction of the cylinder head 4, and supplies operating oil to a not illustrated exhaust-side lash adjuster.

Then, an effect of the oil passage structure of the engine 1 according to the present embodiment will be described.

The oil passage structure of the engine 1 according to the present embodiment includes the main oil passage 62 provided on the front wall 4A of the cylinder head 4 and to be supplied with oil from the oil pump 35 and the intake-side head oil passage 63 and the exhaust-side head oil passage 64 branching off from the main oil passage 62 and leading to the upper surface of the front wall 4A.

The oil passage structure of the engine 1 according to the present embodiment includes the intake-side cam cap internal oil passage 65 provided in the cam cap 14 and allowing the intake-side head oil passage 63 and the intake-side spool valve 25 to communicate with each other and the exhaust-side cam cap internal oil passage 66 provided in the cam cap 14 and allowing the exhaust-side head oil passage 64 and the exhaust-side spool valve 26 to communicate with each other.

The intake-side cam cap internal oil passage 65 communicates with the intake-side spool valve 25 through the intake cam shaft internal oil passage 67, and the exhaust-side cam cap internal oil passage 66 communicates with the exhaust-side spool valve 26 through the exhaust cam shaft internal oil passage 68.

As a result, oil supplied to the main oil passage 62 from the oil pump 35 is diverted into the intake-side head oil passage 63 and the exhaust-side head oil passage 64 from the main oil passage 62.

The oil diverted into the intake-side head oil passage 63 from the main oil passage 62 is supplied to the intake-side spool valve 25 from the intake-side head oil passage 63 through the intake-side cam cap internal oil passage 65 and the intake cam shaft internal oil passage 67.

On the other hand, the oil diverted into the exhaust-side head oil passage 64 from the main oil passage 62 is supplied to the exhaust-side spool valve 26 from the exhaust-side head oil passage 64 through the exhaust-side cam cap internal oil passage 66 and the exhaust cam shaft internal oil passage 68.

Oil in the oil passage 61 leaks, for example, after the engine 1 is stopped so that a hydraulic pressure in the oil passage 61 decreases.

Accordingly, the oil pump 35 feeds oil into the oil passage 61 after the engine 1 is started, and the controller outputs a driving signal to the intake-side solenoid 52 and the exhaust-side solenoid 53 and operates the intake-side valve timing adjustment device 15 and the exhaust-side valve timing adjustment device 16 when a pressure in the hydraulic pressure sensor 70 reaches a predetermined pressure.

At this time, when the intake-side valve timing adjustment device 15 is operated as soon as possible, this is advantageous in reducing exhaust gas and improving fuel consumption.

To operate the intake-side valve timing adjustment device 15 soon after starting the engine 1, oil needs to be quickly supplied to the intake-side spool valve 25 in the intake-side valve timing adjustment device 15, and a hydraulic pressure to be supplied to the intake-side spool valve 25 needs to be accurately detected by the hydraulic pressure sensor 70.

With the oil passage structure of the engine 1 according to the present embodiment, the intake-side cam cap internal oil passage 65 is installed on the opposite side to the exhaust-side bearing portion 18 with respect to the intake-side bearing portion 17, and the exhaust-side cam cap internal oil passage 66 is installed between the intake-side bearing portion 17 and the exhaust-side bearing portion 18.

The main oil passage 62 and the exhaust-side head oil passage 64 extend upward toward the exhaust-side cam cap internal oil passage 66 from below the exhaust-side cam cap internal oil passage 66.

The intake-side head oil passage 63 includes the first intake-side head oil passage 63A extending toward the intake-side wall 4B of the cylinder head 4 from the main oil passage 62 and the second intake-side head oil passage 63B extending upward from the outer end portion 63a in the direction in which the first intake-side head oil passage 63A extends and leading to the intake-side cam cap internal oil passage 65.

In addition thereto, the second intake-side head oil passage 63B is provided with the sensor attachment boss 69 that attaches the hydraulic pressure sensor 70.

Thus, in the oil passage structure of the engine 1, the intake-side cam cap internal oil passage 65 is installed on the opposite side to the exhaust-side bearing portion 18 with respect to the intake-side bearing portion 17, and the second intake-side head oil passage 63B extends upward from the outer end portion 63a in the direction in which the first intake-side head oil passage 63A extends and leads to the intake-side cam cap internal oil passage 65.

As a result, the intake-side cam cap internal oil passage 65 and the second intake-side head oil passage 63B can be brought closer to the intake-side wall 4B of the cylinder head 4 in a direction intersecting the intake cam shaft 11 (a width direction of the cylinder head 4).

Accordingly, the hydraulic pressure sensor 70 can be easily attached to the second intake-side head oil passage 63B through the intake-side wall 4B of the cylinder head 4.

In the oil passage structure of the engine 1, the exhaust-side cam cap internal oil passage 66 is installed between the intake-side bearing portion 17 and the exhaust-side bearing portion 18, and the main oil passage 62 and the exhaust-side head oil passage 64 extend upward toward the exhaust-side cam cap internal oil passage 66 from below the exhaust-side cam cap internal oil passage 66 and the first intake-side head oil passage 63A extends toward the intake-side wall 4B of the cylinder head 4 from the main oil passage 62.

As a result, the main oil passage 62 and the exhaust-side head oil passage 64 are brought closer to the second intake-side head oil passage 63B in the direction intersecting the intake cam shaft 11 so that the length of the first intake-side head oil passage 63A communicating with the main oil passage 62 can be reduced.

Accordingly, after the engine 1 is started, oil can be quickly supplied to the intake-side spool valve 25 from the main oil passage 62 through the first intake-side head oil passage 63A and the second intake-side head oil passage 63B.

In addition thereto, the sensor attachment boss 69 that attaches the hydraulic pressure sensor 70 is attached to the second intake-side head oil passage 63B. Thus, the hydraulic pressure sensor 70 can be brought closer to the intake-side spool valve 25. In addition thereto, a hydraulic pressure in the second intake-side head oil passage 63B can be quickly increased. Therefore, a hydraulic pressure to be supplied to the intake-side spool valve 25 can be more accurately detected.

As described above, the oil passage structure of the engine 1 according to the present embodiment can quickly supply oil to the intake-side spool valve 25 and can accurately detect a hydraulic pressure to be supplied to the intake-side spool valve 25 after starting the engine 1, and therefore can quickly operate the intake-side valve timing adjustment device 15 after starting the engine 1, making it possible to reduce exhaust gas and reduce fuel consumption.

With the oil passage structure of the engine 1 according to the present embodiment, the upper end portion of the front wall 4A is provided with the bolt attachment bosses 31 and 32 that attach the cam cap 14 to the upper surface of the front wall 4A, and the bolt attachment bosses 31 and 32 are respectively installed on both the side portions of the intake-side bearing portion 17.

The second intake-side head oil passage 63B has the upper end portion 63b positioned on the intake-side wall 4B side with respect to the bolt attachment bosses 31 and 32, and is positioned on the opposite side to the intake-side valve timing adjustment device 15 with respect to the bolt attachment bosses 31 and 32 in the axial direction of the intake cam shaft 11 and is adjacent to the bolt attachment boss 31.

In addition thereto, the second intake-side head oil passage 63B is inclined to come closer to the intake-side wall 4B toward the lower end portion 63c from the upper end portion 63b.

As a result, an intermediate potion in a direction in which the second intake-side head oil passage 63B extends is brought closer to the intake-side wall 4B of the cylinder head 4 so that the hydraulic pressure sensor 70 can be easily attached to the sensor attachment boss 69.

In addition thereto, the upper end portion 63b of the second intake-side head oil passage 63B can be brought closer to the intake-side bearing portion 17, and the hydraulic pressure sensor 70 can be brought much closer to the intake-side spool valve 25. Accordingly, a hydraulic pressure to be supplied to the intake-side spool valve 25 can be accurately detected by the hydraulic pressure sensor 70.

With the oil passage structure of the engine 1 according to the present embodiment, the bolt attachment bosses 31 and 32 protrude toward the intake-side valve timing adjustment device 15 from the front wall 4A in the axial direction of the intake cam shaft 11 such that the space 71 is formed therebelow, and the sensor hole portion 69a is provided in the sensor attachment boss 69.

In addition thereto, the sensor hole portion 69a protrudes to the side closer to the bolt attachment bosses 31 and 32 than the outer wall 63d of the second intake-side head oil passage 63B, and extends to the side closer to the bolt attachment bosses 31 and 32 than the second intake-side head oil passage 63B, and the space 71 is formed between the sensor attachment boss 69 and the bolt attachment bosses 31 and 32.

As a result, the sensor attachment boss 69 can be brought closer to the intake-side bearing portion 17 in the direction intersecting the intake cam shaft 11, and the hydraulic pressure sensor 70 can be brought much closer to the intake-side spool valve 25. Accordingly, a hydraulic pressure to be supplied to the intake-side spool valve 25 can be more accurately detected by the hydraulic pressure sensor 70.

Further, the space 71 is installed between the sensor attachment boss 69 and the bolt attachment bosses 31 and 32, whereby the sensor hole portion 69a can be prevented from communicating with the bolt attachment bosses 31 and 32 by blowholes when the cylinder head 4 is manufactured by casting.

In other words, a thick portion where the sensor hole portion 69a and the bolt attachment bosses 31 and 32 communicate with each other by blowholes is previously set to the space 71, whereby the sensor hole portion 69a and the bolt attachment bosses 31 and 32 can be prevented from communicating with each other by blowholes.

Although the embodiment of the present invention has been disclosed, it will be apparent that adjustments can be made by those skilled in the art without departing from the scope of the present invention, as defined by the following claims.

### [Reference Signs List]

1...engine (internal combustion engine), 4...cylinder head, 4A...front wall (end wall), 4B...intake-side wall, 7 ... crankshaft, 9...intake manifold, 11...intake cam shaft, 12...exhaust cam shaft, 14...cam cap, 15...intake-side valve timing adjustment device, 16...exhaust-side valve timing adjustment device, 17...intake-side bearing portion, 18...exhaust-side bearing portion, 23...intake-side housing member (intake-side actuator), 23A...intake-side vane rotor (intake-side actuator), 24...exhaust-side housing member (exhaust-side actuator), 24A...exhaust-side vane rotor (exhaust-side actuator), 25...intake-side spool valve (intake-side hydraulic control valve), 26...exhaust-side spool valve (exhaust-side hydraulic control valve), 31, 32...bolt attachment boss, 62...main oil passage, 63...intake-side head oil passage, 63A ... first intake-side head oil passage, 63 a ... outer end portion (outer end portion of first intake-side head oil passage), 63B...second intake-side head oil passage, 63b...upper end portion (upper end portion of second intake-side head oil passage), 63c...lower end portion (lower end portion of second intake-side head oil passage), 63d...outer wall (outer wall of second intake-side head oil passage), 64...exhaust-side head oil passage, 65 ... intake-side cam cap internal oil passage, 66...exhaust-side cam cap internal oil passage, 69...sensor attachment boss, 69a...sensor hole portion, 70...hydraulic pressure sensor, 71...space

## Claims

1. An oil passage structure of an internal combustion engine (1) comprising:
a cylinder head (4) having an end wall (4A) provided in an end portion in an axial direction of a crankshaft (7) and an intake-side wall (4B) that is provided on a side surface in a width direction perpendicular to the axial direction of the crankshaft (7) and to which an intake manifold (9) is connected;
a cam cap (14) provided on an upper surface of the end wall (4A);
an intake cam shaft (11) to be rotatably supported on an intake-side bearing portion (17) formed on the upper surface of the end wall (4A) and the cam cap (14);
an exhaust cam shaft (12) to be rotatably supported on an exhaust-side bearing portion (18) formed on the upper surface of the end wall (4A) and the cam cap (14);
an intake-side valve timing adjustment device (15) including an intake-side hydraulic control valve (25) provided in an end portion of the intake cam shaft (11) and an intake-side actuator (23) that is installed in an outer peripheral portion of the intake-side hydraulic control valve (25) and adjusts a rotational phase of the intake cam shaft (11) relative to the crankshaft (7) using oil to be supplied from the intake-side hydraulic control valve (25);
an exhaust-side valve timing adjustment device (16) including an exhaust-side hydraulic control valve (26) provided in an end portion of the exhaust cam shaft (12) and an exhaust-side actuator (24) that is installed in an outer peripheral portion of the exhaust-side hydraulic control valve (26) and adjusts a rotational phase of the exhaust cam shaft (12) relative to the crankshaft (7) using oil to be supplied from the exhaust-side hydraulic control valve (26); and
a hydraulic pressure sensor (70) to be attached to the cylinder head (4),
the oil passage structure further comprising:
a main oil passage (62) provided on the end wall (4A) and to be supplied with oil from a hydraulic pressure source;
an intake-side head oil passage (63) and an exhaust-side head oil passage (64) branching off from the main oil passage (62) and leading to the upper surface of the end wall (4A);
an intake-side cam cap internal oil passage (65) provided in the cam cap (14) and allowing the intake-side head oil passage (63) and the intake-side hydraulic control valve (25) to communicate with each other; and
an exhaust-side cam cap internal oil passage (66) provided in the cam cap (14) and allowing the exhaust-side head oil passage (64) and the exhaust-side hydraulic control valve (26) to communicate with each other,
the intake-side cam cap internal oil passage (65) is installed on an opposite side to the exhaust-side bearing portion (18) with respect to the intake-side bearing portion (17),
the exhaust-side cam cap internal oil passage (66) is installed between the intake-side bearing portion (17) and the exhaust-side bearing portion (18),
the main oil passage (62) and the exhaust-side head oil passage (64) extend upward toward the exhaust-side cam cap internal oil passage (66) from below the exhaust-side cam cap internal oil passage (66),
the intake-side head oil passage (63) includes a first intake-side head oil passage (63A) extending toward the intake-side wall (4B) from the main oil passage (62) and a second intake-side head oil passage (63B) extending upward from an outer end portion (63a) in a direction in which the first intake-side head oil passage (63A) extends and leading to the intake-side cam cap internal oil passage (65), and
the second intake-side head oil passage (63B) is provided with a sensor attachment boss (69) that attaches the hydraulic pressure sensor (70).

2. The oil passage structure of the internal combustion engine (1) according to claim 1, **characterized in that**
an upper end portion of the end wall (4A) is provided with a pair of bolt attachment bosses (31, 32) that attaches the cam cap (14) to the upper surface of the end wall (4A),
the pair of bolt attachment bosses (31, 32) are respectively installed in both side portions of the intake-side bearing portion (17),
the second intake-side head oil passage (63B) has its upper end portion positioned on the intake-side wall (4B) side with respect to the pair of bolt attachment bosses (31, 32), and is positioned on an opposite side to the intake-side valve timing adjustment device (15) with respect to the pair of bolt attachment bosses (31, 32) in an axial direction of the intake cam shaft (11) and is adjacent to one of the pair of bolt attachment bosses (31, 32), and
the second intake-side head oil passage (63B) is inclined to come closer to the intake-side wall (4B) toward its lower end portion (63c) from the upper end portion (63b).

3. The oil passage structure of the internal combustion engine (1) according to claim 2, **characterized in that**
the bolt attachment bosses (31, 32) protrude toward the intake-side valve timing adjustment device (15) from the end wall (4A) in the axial direction of the intake cam shaft (11) such that a space (71) is formed therebelow,
a sensor hole portion (69a) is provided in the sensor attachment bosses (69),
the sensor hole portion (69a) protrudes to a side closer to the bolt attachment bosses (31, 32) than an outer wall (63d) of the second intake-side head oil passage (63B), and extends to a side closer to the bolt attachment bosses (31, 32) than the second intake-side head oil passage (63B), and
the space (71) is formed between the sensor attachment boss (69) and the bolt attachment bosses (31, 32).

## Patentansprüche

1. Öldurchflussstruktur eines Verbrennungsmotors (1), umfassend:
einen Zylinderkopf (4), der eine Endwand (4A) aufweist, die in einem Endabschnitt in axialer Richtung einer Kurbelwelle (7) bereitgestellt ist, und eine einlassseitige Wand (4B), die an einer seitlichen Fläche in einer Breitenrichtung senkrecht zu der axialen Richtung der Kurbelwelle (7) bereitgestellt ist und mit der ein Einlasskrümmer (9) verbunden ist;
eine Nockenkappe (14), die auf einer oberen Fläche der Endwand (4A) bereitgestellt ist;
eine Einlassnockenwelle (11), die drehbar an einem einlassseitigen Lagerabschnitt (17) gelagert ist, der an der oberen Fläche der Endwand (4A) und der Nockenkappe (14) gebildet ist;
eine Auslassnockenwelle (12), die drehbar an einem auslassseitigen Lagerabschnitt (18) gelagert ist, der an der oberen Fläche der Endwand (4A) und der Nockenkappe (14) gebildet ist;
eine einlassseitige Ventilsteuerzeiten-Einstellvorrichtung (15), die ein einlassseitiges hydraulisches Steuerventil (25), das in einem Endabschnitt der Einlassnockenwelle (11) bereitgestellt ist, und einen einlassseitigen Aktuator (23) beinhaltet, der in einem äußeren Umfangsabschnitt des einlassseitigen hydraulischen Steuerventils (25) installiert ist und eine Drehphase der Einlassnockenwelle (11) relativ zu der Kurbelwelle (7) unter Verwendung von Öl anpasst, das von dem einlassseitigen hydraulischen Steuerventil (25) bereitgestellt wird;
eine auslassseitige Ventilsteuerzeiten-Einstellvorrichtung (16), die ein auslassseitiges hydraulisches Steuerventil (26), das in einem Endabschnitt der Auslassnockenwelle (12) bereitgestellt ist, und einen auslassseitigen Aktuator (24) beinhaltet, der in einem äußeren Umfangsabschnitt des auslassseitigen hydraulischen Steuerventils (26) installiert ist und eine Drehphase der Auslassnockenwelle (12) relativ zu der Kurbelwelle (7) unter Verwendung von Öl anpasst, das von dem auslassseitigen hydraulischen Steuerventil (26) zugeführt wird; und
einen hydraulischen Drucksensor (70), der an dem Zylinderkopf (4) anzubringen ist,
wobei die Öldurchflussstruktur ferner umfasst:
einen Hauptöldurchfluss (62), der an der Endwand (4A) bereitgestellt wird und mit Öl aus einer hydraulischen Druckquelle zu versorgen ist;
einen einlassseitigen Kopföldurchfluss (63) und einen auslassseitigen Kopföldurchfluss (64), die von dem Hauptöldurchfluss (62) abzweigen und zu der oberen Fläche der Endwand (4A) führen;
einen einlassseitigen im Inneren der Nockenkappe verlaufende Öldurchfluss (65), der in der Nockenkappe (14) bereitgestellt ist und es dem einlassseitigen Kopföldurchfluss (63) und dem einlassseitigen hydraulischen Steuerventil (25) ermöglicht, miteinander zu kommunizieren; und
einen auslassseitigen im Inneren der Nockenkappe verlaufende Öldurchfluss (66), der in der Nockenkappe (14) bereitgestellt ist und es dem auslassseitigen Kopföldurchlass (64) und dem auslassseitigen hydraulischen Steuerventil (26) ermöglicht, miteinander zu kommunizieren,
der einlassseitige im Inneren der Nockenkappe verlaufende Öldurchfluss (65) auf einer dem auslassseitigen Lagerabschnitt (18) gegenüberliegenden Seite in Bezug zu dem einlassseitigen Lagerabschnitt (17) installiert ist,
der auslassseitige im Inneren der Nockenkappe verlaufende Öldurchfluss (66) zwischen dem einlassseitigen Lagerabschnitt (17) und dem auslassseitigen Lagerabschnitt (18) installiert ist,
der Hauptöldurchfluss (62) und der auspuffseitige Kopföldurchfluss (64) sich von unten nach oben in Richtung des auspuffseitigen im Inneren der Nockenkappe verlaufende Öldurchfluss (66) erstrecken,
der einlassseitige Kopföldurchfluss (63) einen ersten einlassseitigen Kopföldurchfluss (63A) beinhaltet, der sich von dem Hauptöldurchfluss (62) zu der einlassseitigen Wand (4B) hin erstreckt, und einen zweiten einlassseitigen Kopföldurchfluss (63B), der sich von einem äußeren Endabschnitt (63A) in einer Richtung, in der sich der erste einlassseitige Kopföldurchfluss (63a) erstreckt und zu dem einlassseitigen im Inneren der Nockenkappe verlaufenden Öldurchfluss (65) führt, nach oben erstreckt, und
der zweite einlassseitige Kopföldurchlass (63B) mit einem Sensorbefestigungsvorsprung (69) versehen ist, an dem der Hydraulikdrucksensor (70) befestigt ist.

2. Öldurchflussstruktur des Verbrennungsmotors (1) nach Anspruch 1, **dadurch gekennzeichnet, dass**
ein oberer Endabschnitt der Endwand (4A) mit einem Paar von Schraubenbefestigungsvorsprüngen (31, 32) versehen ist, mit denen die Nockenkappe (14) an der oberen Fläche der Endwand (4A) befestigt ist,
das Paar von Schraubenbefestigungsvorsprüngen (31, 32) jeweils in beiden seitlichen Abschnitten des einlassseitigen Lagerabschnitts (17) installiert ist,
der zweite einlassseitige Kopföldurchfluss (63B) seinen oberen Endabschnitt auf der Seite der einlassseitigen Wand (4B) in Bezug auf das Paar von Schraubenbefestigungsvorsprüngen (31, 32) aufweist und auf einer gegenüberliegenden Seite der einlassseitigen Ventilsteuerzeiten-Einstellvorrichtung (15) in Bezug auf das Paar von Schraubenbefestigungsvorsprüngen (31, 32) in einer axialen Richtung der Einlassnockenwelle (11) positioniert ist und an einen des Paars von Schraubenbefestigungsvorsprüngen (31, 32) angrenzt, und
der zweite einlassseitige Kopföldurchfluss (63B) so geneigt ist, dass er sich von dem oberen Endabschnitt (63b) zu seinem unteren Endabschnitt (63c) hin der einlassseitigen Wand (4B) annähert.

3. Öldurchflussstruktur des Verbrennungsmotors (1) nach Anspruch 2, **dadurch gekennzeichnet, dass**
die Schraubenbefestigungsvorsprünge (31, 32) von der Endwand (4A) in axialer Richtung der Einlassnockenwelle (11) in Richtung der einlassseitigen Ventilsteuerzeiten-Einstellvorrichtung (15) hervorstehen, sodass darunter ein Raum (71) gebildet wird,
ein Sensorlochabschnitt (69a) in den Sensorbefestigungsvorsprüngen (69) bereitgestellt ist,
der Sensorlochabschnitt (69a) zu einer Seite hervorsteht, die näher an den Schraubenbefestigungsvorsprüngen (31, 32) liegt als eine äußere Wand (63d) des zweiten einlassseitigen Kopföldurchflusses (63B), und sich zu einer Seite erstreckt, die näher an den Schraubenbefestigungsvorsprüngen (31, 32) liegt als der zweite einlassseitige Kopföldurchfluss (63B), und
der Raum (71) zwischen dem Sensorbefestigungsvorsprung (69) und den Schraubenbefestigungsvorsprüngen (31, 32) gebildet wird.

## Revendications

1. Structure de passage d'huile d'un moteur à combustion interne (1) comprenant :
une culasse (4) ayant une paroi d'extrémité (4A) prévue dans une partie d'extrémité dans une direction axiale d'un vilebrequin (7) et une paroi côté admission (4B) qui est prévue sur une surface latérale dans une direction de largeur perpendiculaire à la direction axiale du vilebrequin (7) et à laquelle un collecteur d'admission (9) est relié ;
un capuchon de came (14) prévu sur une surface supérieure de la paroi d'extrémité (4A) ;
un arbre à cames d'admission (11) destiné à être supporté de manière rotative sur une partie d'appui côté admission (17) formée sur la surface supérieure de la paroi d'extrémité (4A) et du capuchon de came (14) ;
un arbre à cames d'échappement (12) destiné à être supporté de manière rotative sur une partie d'appui côté échappement (18) formée sur la surface supérieure de la paroi d'extrémité (4A) et du capuchon de came (14) ;
un dispositif de réglage de synchronisation de soupape côté admission (15) comportant une soupape de commande hydraulique côté admission (25) prévue dans une partie d'extrémité de l'arbre à cames d'admission (11) et un actionneur côté admission (23) qui est installé dans une partie périphérique externe de la soupape de commande hydraulique côté admission (25) et règle une phase de rotation de l'arbre à cames d'admission (11) par rapport au vilebrequin (7) à l'aide de l'huile destinée à être fournie par la soupape de commande hydraulique côté admission (25) ;
un dispositif de réglage de synchronisation de soupape côté échappement (16) comportant une soupape de commande hydraulique côté échappement (26) prévue dans une partie d'extrémité de l'arbre à cames d'échappement (12) et un actionneur côté échappement (24) qui est installé dans une partie périphérique externe de la soupape de commande hydraulique côté échappement (26) et règle une phase de rotation de l'arbre à cames d'échappement (12) par rapport au vilebrequin (7) à l'aide de l'huile destinée à être fournie par la soupape de commande hydraulique côté échappement (26) ; et
un capteur de pression hydraulique (70) à fixer sur la culasse (4),
la structure de passage d'huile comprenant également :
un passage d'huile principal (62) prévu sur la paroi d'extrémité (4A) et destiné à être alimenté en huile à partir d'une source de pression hydraulique ;
un passage d'huile de tête côté admission (63) et un passage d'huile de tête côté échappement (64) se ramifiant à partir du passage d'huile principal (62) et aboutissant à la surface supérieure de la paroi d'extrémité (4A) ;
un passage d'huile interne de capuchon de came côté admission (65) prévu dans le capuchon de came (14) et permettant la communication entre le passage d'huile de tête côté admission (63) et la soupape de commande hydraulique côté admission (25) ; et
un passage d'huile interne de capuchon de came côté échappement (66) prévu dans le capuchon de came (14) et permettant la communication entre le passage d'huile de tête côté échappement (64) et la soupape de commande hydraulique côté échappement (26),
le passage d'huile interne de capuchon de came côté admission (65) est installé sur un côté opposé à la partie d'appui côté échappement (18) par rapport à la partie d'appui côté admission (17),
le passage d'huile interne de capuchon de came côté échappement (66) est installé entre la partie d'appui côté admission (17) et la partie d'appui côté échappement (18),
le passage d'huile principal (62) et le passage d'huile de tête côté échappement (64) se prolongent vers le haut vers le passage d'huile interne de capuchon de came côté échappement (66) à partir du dessous du passage d'huile interne de capuchon de came côté échappement (66),
le passage d'huile de tête côté admission (63) comporte un premier passage d'huile de tête côté admission (63A) se prolongeant vers la paroi côté admission (4B) à partir du passage d'huile principal (62) et un second passage d'huile de tête côté admission (63B) se prolongeant vers le haut à partir d'une partie d'extrémité externe (63a) dans une direction dans laquelle le premier passage d'huile de tête côté admission (63A) se prolonge et aboutit au passage d'huile interne de capuchon de came côté admission (65), et
le second passage d'huile de tête côté admission (63B) est doté d'un bossage de fixation de capteur (69) qui fixe le capteur de pression hydraulique (70).

2. Structure de passage d'huile du moteur à combustion interne (1) selon la revendication 1, **caractérisée en ce que**
une partie d'extrémité supérieure de la paroi d'extrémité (4A) est dotée d'une paire de bossages de fixation de boulon (31, 32) qui fixe le capuchon de came (14) à la surface supérieure de la paroi d'extrémité (4A),
la paire de bossages de fixation de boulon (31, 32) sont respectivement installés dans les deux parties latérales de la partie d'appui côté admission (17),
le second passage d'huile de tête côté admission (63B) a sa partie d'extrémité supérieure positionnée sur le côté paroi côté admission (4B) par rapport à la paire de bossages de fixation de boulon (31, 32), et est positionnée sur un côté opposé au dispositif de réglage de synchronisation de soupape côté admission (15) par rapport à la paire de bossages de fixation de boulon (31, 32) dans une direction axiale de l'arbre à cames d'admission (11) et est adjacente à l'un de la paire de bossages de fixation de boulon (31, 32), et
le second passage d'huile de tête côté admission (63B) est incliné pour se rapprocher de la paroi côté admission (4B) vers sa partie d'extrémité inférieure (63c) à partir de la partie d'extrémité supérieure (63b).

3. Structure de passage d'huile du moteur à combustion interne (1) selon la revendication 2, **caractérisée en ce que**
les bossages de fixation de boulon (31, 32) font saillie vers le dispositif de réglage de synchronisation de soupape côté admission (15) à partir de la paroi d'extrémité (4A) dans la direction axiale de l'arbre à cames d'admission (11) de telle sorte qu'un espace (71) est formé en dessous de celui-ci,
une partie de trou de capteur (69a) est prévue dans les bossages de fixation de capteur (69),
la partie de trou de capteur (69a) fait saillie vers un côté plus proche des bossages de fixation de boulon (31, 32) qu'une paroi externe (63d) du second passage d'huile de tête côté admission (63B), et se prolonge vers un côté plus proche des bossages de fixation de boulon (31, 32) que le second passage d'huile de tête côté admission (63B), et
l'espace (71) est formé entre le bossage de fixation de capteur (69) et les bossages de fixation de boulon (31, 32).
